# EUROPÄISCHE PATENTSCHRIFT

(11) **EP 1 616 902 B1**
(45) Veröffentlichungstag und Bekanntmachung des Hinweises auf die Patenterteilung: **05.05.2010**
(21) Anmeldenummer: 05012503.8
(22) Anmeldetag: 10.06.2005
(51) Int. Cl.: C08J 9/00, C08K 5/00

(54) **Selbstverlöschender Styrolpolymer-Partikelschaumstoff**
Self-extinguishing styrene particle foam
Mousse autoextinguible de particules de polystyrène

(30) Priorität: 15.07.2004 DE 102004034515
(43) Veröffentlichungstag der Anmeldung: 18.01.2006
(73) Patentinhaber: BASF SE, 67056 Ludwigshafen (DE)
(72) Erfinder: Hahn, Klaus, Dr., 67281 Kirchheim (DE); Ehrmann, Gerd, Dr., 67146 Deidesheim (DE); Ruch, Joachim, Dr., 67157 Wachenheim (DE); Allmendinger, Markus, Dr., 67149 Meckenheim (DE); Schmied, Bernhard, Dr., 67227 Frankenthal (DE); Holoch, Jan, Dr., 69181 Leimen (DE)

(56) Entgegenhaltungen:
- EP-A- 0 001 830
- EP-A- 0 002 539
- WO-A-97/45477
- DATABASE WPI Section Ch, Week 200156 Derwent Publications Ltd., London, GB; Class A13, AN 2001-510468 XP002351996 & KR 2001 008 871 A (CHEIL IND INC) 5. Februar 2001 (2001-02-05)

## Beschreibung

Die Erfindung betrifft einen selbstverlöschenden Styrolpolymer-Partikelschaumstoff, enthaltend jeweils bezogen auf das Styrolpolymer
a) 0,05 bis 0,2 Gew.-% einer organische Bromverbindung mit einem Bromgehalt von mindestens 70 Gew.-% als Flammschutzmittel und
b) 0,1 bis 2 Gew.-% eines Flammschutzsynergisten, wobei das Gewichtsverhältnis von Flammschutzsynergisten zu organischer Bromverbindung im Bereich von 1 bis 20 liegt.

KR 2001008871 beschreibt expandierbaren Styrolpolymere enthaltend 0,1 bis 1 Gew.-% Hexabromcyclododekan und 0.05 bis 0.5 Gew.-% Dicumylperoxid als Flammschutzsynergisten.

Verfahren zur Herstellung von flammgeschützten, expandierbaren Styrolpolymeren durch Extrusion einer treibmittelhaltigen Styrolpolymerschmelze sind z.B. aus EP-A 0 981 574, WO 97/45477 oder WO 03/46016 bekannt. Hierbei werden halogenierte Flammschutzmittel, wie Hexabromcyclododekan (HBCD) gegebenenfalls zusammen mit weiteren Additiven, z.B. Flammschutzsynergisten, wie Dicumylperoxid oder Dicumyl, mit Polystyrol aufgeschmolzen und anschließend ein Treibmittel zugegeben. Um flammgeschützte, expandierbare Styrolpolymerer herzustellen, die zu selbstverlöschenden Styrolpolymer-Partikelschaumstoffen verarbeitet werden können, müssen relative hohe Mengen an halogenierten Flammschutzmitteln eingesetzt werden.

Aufgabe der vorliegenden Erfindung war es daher, den genannten Nachteilen abzuhelfen und selbstverlöschende Styrolpolymer-Partikelschaumstoffe mit niedrigem Anteil an halogenierten Verbindungen bereitzustellen, sowie ein Verfahren zur Herstellung von expandierbaren Styrolpolymeren, die durch Vorschäumen und Versintern mit Heißluft oder Wasserdampf zu selbstverlöschende Styrolpolymer-Partikelschaumstoffen verarbeitbar sind.

Demgemäß wurden der eingangs beschriebene, Styrolpolymer-Partikelschaumstoff gefunden.

Der selbstverlöschender Styrolpolymer-Partikelschaumstoff enthält, jeweils bezogen auf das Styrolpolymer bevorzugt
a) 0,1 bis 0,15 Gew.-% einer organische Bromverbindung mit einem Bromgehalt von mindestens 70 Gew.-% als Flammschutzmittel und
b) 0,4 bis 1,5 Gew.-% eines Flammschutzsynergisten.

In der Regel liegt der Flammschutzsynergist bezogen auf das Gewicht im Überschuss zur organischen Bromverbindung vor. Das Gewichtsverhältnis von Flammschutzsynergist zu organischer Bromverbindung liegt erfindungsgemäß im Bereich von 1 bis 20, bevorzugt im Bereich von 2 bis 5.

Es hat sich gezeigt, dass Styrolpolymere mit Molekulargewichten Mw von unter 170.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbau durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekulargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3.5, besonders bevorzugt im Bereich von 1,5 bis 3,0 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatirx eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Als Flammschutzmittel werden organische Bromverbindung mit einem Bromgehalt von mindestens 70 Gew.-% eingesetzt. Insbesondere geeignet sind aliphatische, cycloaliphatische und aromatische Bromverbindungen, wie Hexabromcyclododekan, Pentabrommonochlorcyclohexan, Pentabromphenylallylether.

Geeignete Flammschutzsynergisten sind thermische Radikalbildner mit Halbwertszeiten von 6 Minuten bei Temperaturen im Bereich von 110 bis 300°C, bevorzugt 140 bis 230°C, die flüssig oder in Wasser, Kohlenwasserstoffen oder Weisöl löslich sind. Bevorzugt wird als Flammschutzsynergist Di-tert.-butyl-peroxid (Trigonox® B), Tert.-butylhydroperoxid (Trigonox® A80), eine Lösung von Dicumylperoxid in Pentan oder eine wässrige Lösung eines Peroxides oder Hydroperoxides eingesetzt. Der Flammschutzsynergist wird bevorzugt rein oder im Falle von Feststoffen in bei Normalbedingungen (1 bar, 23°C) nahezu gesättigter Lösung eingesetzt, so dass er mit klassischen Pumpsystemen direkt in einen temperierten und druckbeaufschlagten Raum dosiert werden kann. Durch das Vorliegen in flüssiger Phase ist eine Dosierung so möglich, dass auch von niedrig zerfallenden Peroxiden ausreichende Mengen die Prozess- bzw. Extrusionsbedingungen überstehen und trotzdem eine homogene Einmischung erreicht wird.

Mit Ausnahme der wasserlöslichen Hydroperoxide kann das erfindungsgemäße Verfahren kann auch bei der Herstellung von flammgeschützten, expandierbaren Styrolpolymeren nach dem Suspensionsverfahren eingesetzt werden. In der Suspension ermöglicht die Verwendung von flüssigen Peroxiden eine sichere Handhabung aufgrund der Pumpbarkeit und eine leichte Homogenisierung in der organischen Phase.

Die zur Herstellung der erfindungsgemäßen, selbstverlöschenden Styrolpolymer-Partikelschaumstoffen benötigten expandierbaren Styrolpolymeren (EPS) sind erhältlich durch Extrusion einer Treibmittel- und Flammschutzmittel-haltigen Styrolpolymerschmelze durch eine Düsenplatte mit anschließender Unterwassergranulation, wobei in die Styrolpolymerschmelze ein Treibmittel und jeweils bezogen auf das Styrolpolymer
a) 0,05 bis 0,2 Gew.-% einer organische Bromverbindung mit einem Bromgehalt von mindestens 70 Gew.-% als Flammschutzmittel und
b) 0,1 bis 2 Gew.-% eines Flammschutzsynergisten,wobei das Gewichtsverhältnis von Flammschutzsynergisten zu organischer Bromverbindung im Bereich von 1 bis 20 liegt.
eingemischt werden.

Bevorzugt wird das erfindungsgemäße Verfahren zur Herstellung von flammgeschützten, expandierbaren Styrolpolymeren (EPS) eingesetzt, wobei das Flammschutzmittel in einem Seitenextruder mit einem Anteil Styrolpolymerschmelze vorgemischt und einer Treibmittel-haltigen Styrolpolymerschmelze im Hauptstrom zudosiert und gemeinsam durch eine Düsenplatte mit anschließender Unterwassergranulation extrudiert wird.

Hierbei kann die Verweilzeit des Flammschutzmittels und des Flammschutzsynergisten bei einer Schmelzetemperatur im Bereich von 140 bis 220°C, bevorzugt im Bereich von 170 bis 200 °C bei weniger als 15 Minuten gehalten werden

Zusätzlich kann über die zudosierte Menge an Peroxid/Hydroperoxid im Extruder/statischem Mischer das Molekulargewicht und darüber die VZ des PolymerMaterials eingestellt werden. Dies wiederum ermöglicht eine Anpassung der Expandierbarkeit und der Materialeigenschaften des EPS.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis UD von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis UD im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren umfasst die Schritte
a) Polymerisation von Styrolmonomer und gegebenenfalls copolymersierbaren Monomeren zu einem Styrolpolymer mit einem mittleren Molekulargewicht im Bereich von 160.000 bis 400.000 g/mol,
b) Entgasung der erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
d) Kühlen der treibmittelhaltigen Styrolpolymerschmelze auf eine Temperatur, die mindestens 120°C, bevorzugt 150 - 200°C beträgt,
e) Eintragen des Flammschutzmittels über einen Seitenextruder,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimprägnierung in Stufe d) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmonomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen d) bis f) eingehalten. Besonders bevorzugt werden ausschließlich statische Mischer und statische Kühler im gesamten Verfahren eingesetzt. Die Polymerschmelze kann durch Druckpumpen, z.B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Bei Verwendung von Peroxiden als Flammschutzmittel werden die Reststyrol-Gehalte des treibmittelhaltigen Granulats überraschenderweise signifikant gesenkt. Durch die Peroxid-Zugabe wird nur eine leichte Reduzierung des mittleren Molekulargewichts beobachtet, es wird jedoch keine wesentliche Entstehung von Oligomeren oder Monomeren gefunden. Dies ermöglicht einerseits die Verwendung von Polystyrolschmelzen mit höheren Restmonomer-Gehalten, was wiederum geringeren Aufwand bei der Entgasung nach dem Polystyrol-Reaktor beinhaltet. Andererseits können ausgehend von bereits weitgehend entgastem Polystyrol die Restmonomer-Gehalte noch weiter gesenkt werden. Auf diese Weise können EPS-Granulate mit Restmonomer-Gehalten unter 250 ppm erreicht werden.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25%), Glycerintristearat (typischerweise 0,25%) feinteiliger Kieselsäure Aerosil R972 (typischerweise 0,12%) und Zn-Stearat (typischerweise 0,15%), sowie Antistatikum beschichtet werden.

Die erfindungsgemäßen expandierdierbaren Styrolpolymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden.

### Beispiele:

### Einsatzstoffe:

PS148 G (Polystyrol der BASF AG mit einer Viskositätszahl VZ von 83 ml/g, mittlerem Molekulargewicht M_{w} von 220.000 g/mol und einer Uneinheitlichkeit M_{w}/Mₙ von 2,9)

HBCD: Hexabromcyclododekan FR 12306 Hat der Fa. Eurobrom (Flammschutzmittel)

Flammschutzsynergisten:
Di-tert.-butyl-peroxid (Trigonox® B),
Tert.-butyl-hydroperoxid (Trigonox® A80)
50 Gew.-ige Lösung von Dicumylperoxid in Pentan

### Beispiel 1 - 6:

Zu einem Hauptstrom einer treibmittelhaltige Polymerschmelze (Polystyrol 148 G und 7 Gew.-% n-Pentan) wurde nach Abkühlen von 260°C auf 190°C über einen Seitenextruder in einer Polystyrolschmelze vorgemischtes Hexabromcyclododekan (HBCD) gemäß den Angaben in Tabelle 1 (Gewichtsprozent, bezogen auf Polystyrol) zudosiert. Auf gleicher Höhe wurde über eine Kolbenpumpe und Dosierlanze der Flammschutzsynergist zudosiert. Die resultierende Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

### Vergleichsversuche V1 bis V4

Beispiel 1 wurde wiederholt, wobei HBCD und/oder Flammschutzsynergist weggelassen wurden.

Die erhaltenen expandierbaren Polystyrolgranulate wurden in strömendem Wasserdampf zu Schaumstoffpartikel mit einer Dichte von etwa 20 g/l vorgeschäumt und nach 24-stündiger Lagerung in gasdichten Formen mit Wasserdampf zu Schaumstoffkörpern verschweißt.

Nach 72-stündiger Lagerung der Schaumstoffkörper wurde das Brandverhalten bestimmt. Hierfür wurden die Schaumstoffkörper in einem Horizontalbrandtest 2 Sekunden lang mit einer Bunsenbrennerflamme beflammt und anschließend aus der Flamme entfernt. Nachbrennzeiten von unterhalb 6 Sekunden sind geeignet um den B2 Test nach DIN 4102 zu bestehen.

Die Menge an Flammschutzmittel (Dosierung) sowie die Ergebnisse des Brandschutztestes sind in Tabelle 1 zusammengefasst.

**Tabelle 1:**

| Beispiel | HBCD [Gew.-%] | Synergist [Gew.-%] | Synergist | Nachbrennzeit [sec.] |
|---|---|---|---|---|
| V1 | - | - | - | brennt ab |
| V2 | - | 0,4 | Trigonox® A80 - | brennt ab |
| V3 | - | 0,4 | Trigonox® B | brennt ab |
| V4 | 0,2 | - | - | brennt ab |
| 1 | 0,2 | 0,4 | Trigonox® B | 12 |
| 2 | 0,2 | 0,6 | Trigonox® B | 6 |
| 3 | 0,2 | 1,0 | Trigonox® B | 5 |
| 4 | 0,2 | 0,6 | Dicumylperoxid | 8 |
| 5 | 0,2 | 0,6 | Trigonox® A80 | 13 |
| 6 | 0,15 | 0,6 | Trigonox® B | 10 |

## Patentansprüche

1. Selbstverlöschender Styrolpolymer-Partikelschaumstoff, enthaltend jeweils bezogen auf das Styrolpolymer
a) 0,05 bis 0,2 Gew.-% einer organische Bromverbindung mit einem Bromgehalt von mindestens 70 Gew.% als Flammschutzmittel und
b) 0,1 bis 2 Gew.-% eines Flammschutzsynergisten,
**dadurch gekennzeichnet, dass** das Gewichtsverhältnis von Flammschutzsynergist zu organischer Bromverbindung im Bereich von 1 bis 20 liegt.

2. Selbstverlöschender Styrolpolymer-Partikelschaumstoff nach Anspruch 1, **dadurch gekennzeichnet, dass** das Gewichtsverhältnis von Flammschutzsynergist zu organischer Bromverbindung im Bereich von 2 bis 5 liegt.

3. Selbstverlöschender Styrolpolymer-Partikelschaumstoff nach Anspruch 1 oder 2, **dadurch gekennzeichnet, dass** er als Flammschutzmittel Hexabromcyclododekan enthält.

4. Selbstverlöschender Styrolpolymer-Partikelschaumstoff nach einem der Ansprüche 1 bis 3, **dadurch gekennzeichnet, dass** er als Flammschutzsynergist Dicumyl, Dicumylperoxid, Di-tert.-butyl-peroxid, Tert.-butyl-hydroperoxid oder Mischungen davon, enthält.

5. Expandierbares Styrolpolymer (EPS), aus welchem durch Vorschäumen und Versintern selbstverlöschende Styrolpolymer-Partikelschaumstoffe gemäß den Ansprüchen 1 bis 4 erhältlich sind.

6. Verfahren zur Herstellung von expandierbaren Styrolpolymeren (EPS) durch Extrusion einer Treibmittel- und Flammschutzmittel-haltigen Styrolpolymerschmelze durch eine Düsenplatte mit anschließender Unterwassergranulation, **dadurch gekennzeichnet, dass** in die Styrolpolymerschmelze ein Treibmittel und jeweils bezogen auf das Styrolpolymer
a) 0,05 bis 0,2 Gew.-% einer organische Bromverbindung mit einem Bromgehalt von mindestens 70 Gew.-% als Flammschutzmittel und
b) 0,1 bis 2 Gew.-% eines Flammschutzsynergisten. eingemischt werden, wobei das Gewichtsverhältnis von Flammschutzsynergist zu organischer Bromverbindung im Bereich von bis 20 liegt.

7. Verfahren nach Anspruch 6, **dadurch gekennzeichnet, dass** die Verweilzeit des Flammschutzmittels bei einer Schmelzetemperatur im Bereich von 140 bis 220°C weniger als 30 Minuten beträgt.

8. Verfahren nach Anspruch 6 oder 7, **dadurch gekennzeichnet, dass** das Flammschutzmittel der Teibmittel-haltigen Styrolpolymerschmelze zudosiert wird.

9. Verfahren nach einem der Ansprüche 6 bis 8, **dadurch gekennzeichnet, dass** das Flammschutzmittel in einem Seitenextruder mit einem Anteil Styrolpolymerschmelze vorgemischt und der Styrolpolymerschmelze im Hauptstrom zudosiert wird.

## Claims

1. A self-extinguishing expanded styrene polymer foam comprising, in each case based on the styrene polymer,
a) from 0.05 to 0.2% by weight of an organic bromine compound having a bromine content of at least 70% by weight as flame retardant and
b) from 0.1 to 2% by weight of a flame retardant synergist,
wherein the weight ratio of flame retardant synergist to organic bromine compound is in the range from1 to 20.

2. The self-extinguishing expanded styrene polymer foam according to claim 1, wherein the weight ratio of flame retardant synergist to organic bromine compound is in the range from 2 to 5.

3. The self-extinguishing expanded styrene polymer foam according to claim 1 or 2 which comprises hexabromocyclododecane as flame retardant.

4. The self-extinguishing expanded styrene polymer foam according to any of claims 1 to 3 which comprises dicumyl, dicumyl peroxide, di-tert-butyl peroxide, tert-butyl hydroperoxide or a mixture thereof as flame retardant synergist.

5. An expandable styrene polymer (EPS) from which self-extinguishing expanded styrene polymer foams according to claims 1 to 4 can be obtained by prefoaming and sintering.

6. A process for producing expandable styrene polymers (EPS) by extrusion of a styrene polymer melt containing blowing agent and flame retardant through a die plate with subsequent underwater pelletization, wherein a blowing agent and, in each case based on the styrene polymer,
a) from 0.05 to 0.2% by weight of an organic bromine compound having a bromine content of at least 70% by weight as flame retardant and
b) from 0.1 to 2% by weight of a flame retardant synergist,
are mixed into the styrene polymer melt, where the weight ratio of flame retardant synergist to organic bromine compound is in the range from 1 to 20.

7. The process according to claim 6, wherein the residence time of the flame retardant at a melt temperature in the range from 140 to 220°C is less than 30 minutes.

8. The process according to claim 6 or 7, wherein the flame retardant is metered into the styrene polymer melt containing blowing agent.

9. The process according to any of claims 6 to 8, wherein the flame retardant is premixed with a proportion of styrene polymer melt in a side extruder and is metered into the main stream of the styrene polymer melt.

## Revendications

1. Mousse autoextinguible à base de particules de polymère de styrène, contenant, chaque fois par rapport au polymère de styrène
a) de 0,05 à 0,2 % en poids d'un composé bromé organique ayant une teneur en brome d'au moins 70 % en poids, en tant qu'agent ignifuge et
b) de 0,1 à 2 % en poids d'un agent synergique ignifuge,
**caractérisée en ce que** le rapport pondéral de l'agent synergique ignifuge au composé bromé organique se situe dans la plage allant de 1 à 20.

2. Mousse autoextinguible à base de particules de polymère de styrène selon la revendication 1, **caractérisée en ce que** le rapport pondéral de l'agent synergique ignifuge au composé bromé organique se situe dans la plage allant de 2 à 5.

3. Mousse autoextinguible à base de particules de polymère de styrène selon la revendication 1 ou 2, **caractérisée en ce qu'**elle contient comme agent ignifuge de l'hexabromocyclododécane ;

4. Mousse autoextinguible à base de particules de polymère de styrène selon l'une quelconque des revendications 1 à 3, **caractérisée en ce qu'**elle contient comme agent synergique ignifuge du dicumyle, du peroxyde de dicumyle, du peroxyde de di-tert-butyle, de l'hydroperoxyde de tert-butyle ou des mélanges de ceux-ci.

5. Polymère de styrène expansible (EPS), à partir duquel peuvent être obtenues par transformation préliminaire en mousse et frittage des mousses autoextinguibles à base de particules de polymère de styrène selon les revendications 1 à 4.

6. Procédé pour la production de polymères de styrène expansibles (EPS), par extrusion à travers une plaque de filière d'une masse fondue de polymère de styrène contenant un agent ignifuge et un agent d'expansion, avec granulation subséquente sous l'eau, **caractérisé en ce qu'**on incorpore dans la masse fondue de polymère de styrène un agent d'expansion et, chaque fois par rapport au polymère de styrène,
a) de 0,05 à 0,2 % en poids d'un composé bromé organique ayant une teneur en brome d'au moins 70 % en poids, en tant qu'agent ignifuge et
b) de 0,1 à 2 % en poids d'un agent synergique ignifuge,
le rapport pondéral de l'agent synergique ignifuge au composé bromé organique se situant dans la plage allant de 1 à 20.

7. Procédé selon la revendication 6, **caractérisé en ce que** le temps de séjour de l'agent ignifuge à une température de la masse fondue dans la plage de 140 à 220 °C est inférieur à 30 minutes.

8. Procédé selon la revendication 6 ou 7, **caractérisé en ce que** l'agent ignifuge est ajouté par addition dosée à la masse fondue de polymère de styrène contenant un agent d'expansion.

9. Procédé selon l'une quelconque des revendications 6 à 8, **caractérisé en ce que** l'agent ignifuge est pré-mélangé, dans une extrudeuse latérale, avec une partie de la masse fondue de polymère de styrène et ajouté par addition dosée à la masse fondue de polymère de styrène dans le courant principal.
